(19) Europäisches Patentamt / European Patent Office / Office européen des brevets

(11) **EP 3 842 127 B1**

(12) **EUROPEAN PATENT SPECIFICATION**

(45) Date of publication and mention
of the grant of the patent:
**03.05.2023 Bulletin 2023/18**

(21) Application number: **20215824.2**

(22) Date of filing: **18.12.2020**

(51) International Patent Classification (IPC):
**B01D 61/02** (2006.01)    **B01D 69/02** (2006.01)
**B01D 69/06** (2006.01)    **B01D 69/12** (2006.01)
**B01D 71/34** (2006.01)    **B01D 71/56** (2006.01)
**B01D 71/64** (2006.01)

(52) Cooperative Patent Classification (CPC):
**B01D 61/02; B01D 69/02; B01D 69/06;**
**B01D 69/125; B01D 71/34; B01D 71/36;**
**B01D 71/56; B01D 71/64;** B01D 2325/24;
B01D 2325/30

(54) **COMPOSITE SEMIPERMEABLE MEMBRANE**

HALBDURCHLÄSSIGE VERBUNDMEMBRAN

MEMBRANE COMPOSITE SEMI-PERMÉABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2019 JP 2019238353**
**20.08.2020 JP 2020139035**

(43) Date of publication of application:
**30.06.2021 Bulletin 2021/26**

(73) Proprietor: **Nitto Denko Corporation
Ibaraki-shi,
Osaka 567-8680 (JP)**

(72) Inventors:
• **SATO, Nagahisa**
 **Osaka 567-8680 (JP)**
• **ECHIZEN, Masashi**
 **Osaka 567-8680 (JP)**
• **SAKAKIBARA, Yasuyuki**
 **Osaka 567-8680 (JP)**

(74) Representative: **Cabinet Beau de Loménie
158, rue de l'Université
75340 Paris Cedex 07 (FR)**

(56) References cited:
 **WO-A1-2019/131304**    **CN-A- 108 079 806**
 **US-A- 5 702 503**

• **LIU FENG ET AL: "A review: the effect of the
 microporous support during interfacial
 polymerization on the morphology and
 performances of a thin film composite membrane
 for liquid purification", RSC ADVANCES, vol. 9,
 no. 61, 1 November 2019 (2019-11-01), pages
 35417-35428, XP055798005, GB ISSN: 2046-2069,
 DOI: 10.1039/C9RA07114H**
• **BA C ET AL: "Preparation of PMDA/ODA
 polyimide membrane for use as substrate in a
 thermally stable composite reverse osmosis
 membrane", JOURNAL OF MEMBRANE
 SCIENCE, ELSEVIER BV, NL, vol. 363, no. 1-2, 1
 November 2010 (2010-11-01), pages 140-148,
 XP027261209, ISSN: 0376-7388 [retrieved on
 2010-09-02]**

**Description**

FIELD OF THE INVENTION

The present invention relates to a composite semipermeable membrane.

BACKGROUND OF THE INVENTION

As composite semipermeable membranes used in desalination, membranes having a substrate, a porous layer composed of an organic polymer, and a separation membrane layer have been widely used. In particular, composite semipermeable membranes used for desalination by reverse osmosis including a polysulfone porous layer and a polyamide separation membrane layer (for example, Patent Document 1), are conventionally used.

Meanwhile, materials of the porous layer, which used to remove turbidity before desalination and does not provide a membrane separation function, include polymers such as polysulfone, polyfluorocarbon, polyvinylidene difluoride, polyethylene, polypropylene, polyvinyl alcohol, and polyacrylonitrile (for example, Patent Document 2).

RELATED ART DOCUMENTS

Patent Documents

Patent Document 1: Japanese Unexamined Patent Application Publication (Translation of PCT Application) No. 2014-523340
Patent Document 2: Japanese Unexamined Patent Publication No. Sho58-93734

US patent 5, 702, 503 shows a composite membrane made of an asymmetric porous support and an ultrathin layer having a thickness of less than 100 $\mu$m.

WO 2019/131304 A1 shows a composite hollow fiber membrane provided with a semipermeable membrane layer and a hollow-fiber-like porous support layer, wherein the semipermeable membrane layer contains a crosslinked polyamide polymer formed from a polyfunctional amine compound and a polyfunctional acid halide compound, the support layer has a gradient structure such that the sizes of cells in the support layer gradually increase in a direction from one of an inner surface and an outer surface of the support layer toward the other.

CN 108079806 A discloses a polyamide semipermeable membrane which has a three-dimensional nano-scale Turing structure.

Liu Feng et al.: "A review: the effect of the microporous support during interfacial polymerization on the morphology and performances of a thin film composite membrane for liquid purification", RSC Advances, vol. 9, no. 61, 1 November 2019, pages 35417 - 35428, shows a polyamide formation on a microporous support for providing a composite porous membrane.

C. Ba et al.: "Preparation of PMDA/ODA polyimide membrane for use as substrate in a thermally stable composite reverse osmosis membrane", Journal of Membrane Science, ELSEVIER BV, NL, vol. 363, no. 1-2, 1 November 2010, pages 140-148, shows a composite membrane developed via interfacial polymerization of m-phenylenediamine and trimesoyl chloride on the polyimide membranes to show 98% rejection to 2.0 g/L NaCl solution with a permeation flux of 1.1 $m^3$ $m^{-2}$ $day^{-1}$ at 55.2 bar and room temperature.

SUMMARY OF THE INVENTION

Problem to be solved by the invention

In recent years, from the viewpoint of securing water resources and protecting the environment, the importance of reusing desalinated water or desalinated aqueous solution has been increased. In addition, further processing to desalinate an oil-containing liquid may be required, for example by using high-pressure conditions, which differ from conventional techniques.

However, it has been found that in the conventional configuration having a polysulfone porous layer as described in Patent Document 1, the processing performance deteriorates over time, and sufficient desalination cannot be achieved. A membrane separation layer having polysulfone as a porous support layer is not suitable for the treatment of an oil-containing liquid. When a composite semipermeable membrane including a porous layer of polysulfone is used to treat an oil-containing liquid, the porous layer formed by polysulfone may deteriorate and form leak spots, or delaminate between the porous layer and the membrane separation layer. Therefore, it is difficult to maintain processing ability in the continued use of a composite semipermeable membrane with a polysulfone porous layer.

In addition, because the porous layer that does not have the membrane separation function, as described in Patent Document 2, is normally a membrane that is produced for high water permeability at a pressure of less than 0.3 MPa. Generally, such membrane is poor in pressure resistance because the porosity is high. Therefore, the use of such membrane is not presumed to be used under high pressure condition.

Accordingly, in view of the foregoing, one aspect of the invention is to provide a novel composite semipermeable membrane capable of continuously desalting an oil-containing liquid even under high pressure conditions.

Means for Solving Problems

The composite semipermeable membrane according to the invention is defined in the claims.

Effects of the Invention

According to an aspect of the invention, the invention provides a composite semipermeable membrane that can continuously and stably desalt without having leak spots or causing delamination between the porous layer and the membrane separation layer, even with an oil-containing liquid.

BRIEF DESCRIPTION OF THE DRAWINGS

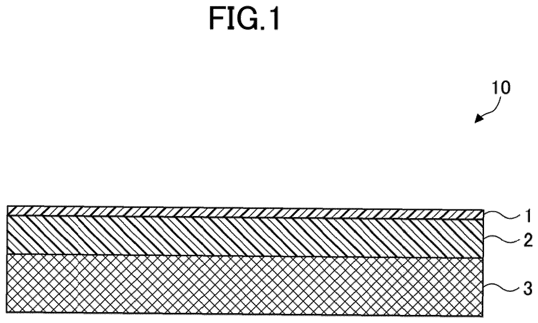

FIG. 1 is a schematic cross-sectional view of a composite semipermeable membrane according to an embodiment of the invention.

DESCRIPTION OF THE PREFERRED EMBODIMENTS

The invention is defined in the claims.

A composite semipermeable membrane 10 according to one embodiment of the present invention includes a porous layer 2 and a membrane separation layer (active layer or skin layer) 1 provided on the porous layer (porous support layer) 2, as illustrated in FIG. 1. As illustrated in FIG. 1, the composite semipermeable membrane 10 may include a substrate 3 for reinforcing the porous layer 2.

In this specification, "semipermeable membrane" refers to a membrane that is permeable to a portion of the components present in a liquid and impermeable to other components of the liquid. Also, "composite" in a composite semipermeable membrane indicates that a plurality of layers having different functions or configurations are laminated.

The membrane separation layer in the composite semipermeable membrane is an extremely thin layer provided at the top of the composite semipermeable membrane. The porous layer then serves to support the membrane separation layer. The porous layer consists of a polymer (organic polymer or organic polymer compound), and more specifically, a polymer containing one of either a fluoropolymer or an imide group-containing polymer selected from polyetherimide and polyamideimide, to be substantially configured by one of either the fluoropolymer or the imide group-containing polymer. In the present specification, the term "substantially" indicates that components other than the prescribed components that are inevitably produced or contaminated during manufacturing can be allowed.

A fluoropolymer is a fluorine-containing polymer. Examples of fluoropolymers include polyvinylidene fluoride (PVDF), polytetrafluoroethylene (PTFE), polyvinyl fluoride (PVF), polychlorotrifluoroethylene (trifluoroethylene, PCTFE), perfluoroalkoxyalkane (ethylene tetrafluoride-perfluoroalkoxyethylene copolymer, PFA), perfluoroethylene propene copolymer (ethylene tetrafluoride-hexafluoropropylene copolymer, FEP), ethylene tetrafluoroethylene copolymer (ethylene tetrafluoride-ethylene copolymer, ETFE), ethylene chlorotrifluoroethylene copolymer (ethylene trifluoride-ethylene copolymer, ECTFE), and the like. Among the fluoropolymers, it is preferable to use polyvinylidene fluoride (PVDF), which has relatively excellent workability and is capable of forming a porous layer with excellent pressure resistance and chemical resistance.

In addition to chemical resistance and pressure resistance, the imide group-containing polymer is an easy-to-process material with excellent heat resistance and contains one or more imide bonds in the monomer units constituting the polymer. The imide group-containing polymer is selected from polyetherimide (PEI) and polyamideimide (PAI). Examples of polyetherimide (PEI) include "Ultem (Registered Trademark) 1000" manufactured by SABIC Innovative Plastics. Examples of polyamide imide (PAI) include "Torlon (Registered Trademark) AI-10" manufactured by Solvay, and "Vylomax (Registered Trademark) HR-22BL" manufactured by Toyobo Co., Ltd., whereas "KPI-MX300F" manufactured by Kawamura Sangyo Co., Ltd. and "P84 (Registered Trademark)" manufactured by EVONIK are polyimdides (PI).

The polymers can be a combination of two or more. Herein, the term "combination" of polymers may be two or more polymer blends (polymer alloys) of the polymers, a copolymer in which two or more monomer units that form the polymers are copolymerized, or a polymer blend of such copolymers. The copolymerization may be a graft copolymerization, a block copolymerization, or the like.

Thus, the porous layer may include either a fluoropolymer or the imide group-containing polymer. In view of the excellent pressure resistance and the chemical resistance of fluoropolymers, the porous layer may preferably include the fluoropolymer alone. In view of the excellent heat resistance as well as excellent pressure resistance and chemical resistance of fluoropolymers, the porous layer may preferably include the imide group-containing polymer alone.

The polymer in the porous layer exemplified in the specification may be a homopolymer, a copolymer, or a mixture of a homopolymer and a copolymer. Thus, for example, when referring to polyvinylidene fluoride, the monomer unit may be a vinylidene fluoride homopolymer which is substantially vinylidene fluoride, the main monomer unit may be a vinylidene fluoride copolymer, or a mixture of a vinylidene fluoride monomer and a vinylidene fluoride copolymer. In that case, the vinylidene fluoride homopolymer may be a single vinylidene fluoride homopolymer or a mixture of different vinylidene fluoride homopolymers, and the vinylidene fluoride copolymer may be a single vinylidene fluoride copolymer or a mixture of different vinylidene fluoride copolymers. In the specification, "primary" monomer unit refers that the number of predetermined monomer units is 50% or more relative to the number of total monomer units in the polymer.

When a porous layer includes a copolymer of a fluoropolymer, another monomer unit that is copolymerized with a main monomer unit may be the monomer unit of the fluoropolymer described above, the monomer unit of the fluoropolymer other than the fluoropolymer described above, or the monomer component (fluorine-free monomer component) that is not a fluoropolymer. When the polymer in the porous layer includes a polyvinylidene fluoride copolymer, another monomer unit is preferably copolymerized with a monomer unit derived from hexafluoropropylene, tetrafluoroethylene, chlorotrifluoroethylene and more preferably contain a monomer unit derived from hexafluoropropylene. That is, when the polymer contains a vinylidene fluoride copolymer, the vinylidene fluoride copolymer preferably contains monomer units derived from vinylidene fluoride and monomer units derived from hexafluoropropylene (that is, the vinylidene fluoride-hexafluoropropylene copolymer). In addition, when the polyvinylidene fluoride copolymer contains monomer units derived from hexafluoropropylene as another monomer unit (non-main monomer unit), the weight of monomer units derived from hexafluoropropylene may be preferably 30% by weight or less, more preferably 20% by weight or less, and even more preferably 10% by weight or less, based on the weight of the total polyvinylidene fluoride copolymer.

The weight average molecular weight of the polymer is preferably 100,000 or more and 2,000,000 or less, 100,000 or more and 1,000,000 or less, more preferably 200,000 or more and 800,000 or less, further more preferably 250,000 or more and 700,000 or less, even more preferably 250,000 or more and 550,000 or less, and most preferably 400,000 or more and 550,000 or less. When the weight average molecular weight of the polymer is 100,000 or more, appropriate processability of a porous layer. Also, when the weight average molecular weight of the polymer is 2,000,000 or less, the strength of the porous layer and the composite semipermeable membrane, which configured by the porous layer, can be improved.

Furthermore, when the polymer is the imide group-containing polymer, the weight average molecular weight of the polymer is preferably 5,000 or more and 500,000 or less and more preferably 10,000 or more and 50,000 or less. The polymer has a weight average molecular weight of 5,000 or more, resulting in appropriate processability of a porous layer. In addition, when the weight average molecular weight of the polymer is 500,000 or less, the strength of the porous layer and the composite semipermeable membrane which configured by the porous layer can be improved.

Thus, in the present embodiment, because the porous layer contains a polymer one of either the fluoropolymer or the imide group-containing polymer, a composite semipermeable membrane with excellent oil resistance can be obtained. Therefore, even if an oil-containing liquid is treated for a long period of time, deterioration of the porous layer is unlikely and delamination between the porous layer and the membrane separation layer is not likely to occur. Therefore, the performance of the composite semipermeable membrane is not degraded upon exposure to oil, and favorable desalination can be performed.

Further, in the present embodiment, a compression ratio of a portion including the porous layer and the membrane separation layer when subjected to a pressure of 5.5 MPa is 0.1% or more and 60% or less, preferably 1.0% or more and 50% or less, and more preferably 1.0% or more and 40% or less.

The compression ratio of the portion including the porous layer and the membrane separation layer is the ratio of the reduced thickness due to compression (i.e., the initial thickness minus the thickness post pressurization) during a predetermined period of time under a predetermined pressure to the initial thickness.

The compression ratio of a portion including the porous layer and the membrane separation layer is the compression ratio when subjected to a pressure of 5.5 MPa for 2 hours, specifically the compression ratio after forming a composite semipermeable membrane including a porous layer and a membrane separation layer, followed by applying liquid to the composite semipermeable membrane at a pressure of 5.5 MPa for 2 hours.

As described above, the portion including the porous layer and the membrane separation layer of the present embodiment has the compression ratio in the range described above, and exhibits excellent pressure resistance. Accordingly, the composite semipermeable membrane of the present invention can be used under conditions of high operating pressure. For example, in the composite semipermeable membrane of the present embodiment, even when an operating pressure, for example, 1 to 12 MPa is applied to the composite semipermeable membrane by a reverse osmosis method, a salt-blocking ratio of a portion including the porous layer and the membrane separation layer in the composite semipermeable membrane can be maintained for a long period of time.

The portion including the porous layer and the membrane separation layer of the present embodiment has a compression ratio of 60% or less when subjected to a pressure of 5.5 MPa is applied as described above. Thus, the strength of the entire membrane is high. Accordingly, even when used under high operating pressures for a long period of time, structural changes in the porous layer can be minimized and a desalination performance can be favorably maintained.

The polymer in the porous layer is substantially free of polysulfone. When the amount of a predetermined component with respect to the total amount of polymer is 0%, the predetermined component is not contained in the porous layer. An oil resistance of the composite semipermeable membranes is improved by the lowered amount of polysulfone in the polymer or by the polymer being free of polysulfone. Therefore, when a composite semipermeable membrane of the present embodiment is used to desalinate an oil-containing liquid, a continuous desalination treatment can be achieved without leaking spots in the porous layer or delamination between the porous layer and the membrane separation layer. The polymer contained in the porous layer of the present embodiment is substantially free of polymers having sulfonyl groups, such as polyethersulfone, polyphenylsulfone, and the like.

Furthermore, the porous layer is a homogeneous layer as a whole. In the present specification, a homogeneous layer indicates that the porous layer is configured by a single phase, that is, separated multiple polymer phases are not observed in the conventional manner.

A method of producing the porous layer of the present embodiment is a non-solvent-induced phase separation method (NIPS) or a thermally-induced phase separation (TIPS). A non-solvent-induced phase separation method (NIPS) is preferably used because a uniform and wide porous layer can be produced. More specifically, after the above-described polymer is dissolved in a solvent to obtain a membrane-forming solution, the membrane-forming solution is applied to a substrate such as a non-woven fabric, using a knife coater or the like. The resulting layer is placed under high humidity so as to generate a microphase separation in a portion where the solution is applied, and the polymer in the applied solution is then allowed to solidify and the residual solution is removed.

In preparing the porous layer by the non-solvent induced phase separation method described above, the polymer is dissolved in a solvent to form a homogenous membrane-forming solution. Also, the solvent used is preferably a water-soluble solvent and has high boiling point, because a favorable microphase separation can be generated in a portion where the solution is applied. For example, the solvent used is preferably a water-soluble solvent having a boiling point of 130°C or higher and 250°C or lower. Examples of the solvents include dimethylformamide (DMF), dimethylsulfoxide (DMSO), dimethylacetamide (DMAC), 1,3-dimethyl-2-imidazolidinone (DMI), N-methylpyrrolidone (NMP), γ-butyrolactone (GBL), and the like. In other words, the polymer used in the present embodiment is preferably soluble in the above-mentioned solvents and can be dissolved in the solvents at temperatures from room temperature to about 80°C to obtain a homogenous membrane-forming solution.

At the time of producing the membrane-forming solution, in addition to the above solvents, polyoxyalkylene such as polyethylene glycol, polybutylene glycol, and the like; water-soluble polymers such as polyvinyl alcohol, polyvinyl butyral, and the like; glycerin; diethylene glycol; water; acetone; 1,3-dioxolane; and the like may be added as a porous agent. The porosity, pore diameter, and the like in the porous layer can be adjusted by adding a predetermined amount of the porous agent.

In addition, the porosity of the porous layer before applying pressure in the present embodiment is preferably 30% or more and 70% or less, more preferably 35% or more and 70% or less, further more preferably 49% or more and 60% or less, and most preferably 40% or more and 50% or less. When the porosity of the porous layer is 30% or more, the water permeability and desalting ability of the composite semipermeable membrane can be ensured. In addition, when the porosity of the porous layer is 70% or less, the pressure resistance and the strength of the porous layer and the composite semipermeable membrane can be improved, and the permeation performance of the permeable flux can be improved. Furthermore, high permeability can be maintained even when the porous layer is compressed by the application of pressure for long periods of time or at high pressure. The porosity of the porous layer can be measured based on the weight of the porous layer filled with pure water.

Further, the porosity of the porous layer after applying a pressure, for example, after applying a pressure at a pressure of 5.5 MPa for 2 hours, is preferably 30% or more and 60% or less.

The crystallinity of the polymer used in the present embodiment is preferably 10% or more and 80% or less, more preferably 20% or more and 70% or less, furthermore preferably 25% or more and 60% or less, even more preferably 30% or more and 55% or less, and most preferably 30% or more and 50% or less. When the crystallinity of the polymer is 10% or more, the pressure resistance of the porous layer and the composite semipermeable membrane can be improved. In addition, when the crystallinity of the polymer is 80% or less, a suitable flexibility to the porous layer can be provided so that a composite semipermeable membrane that is resistant to breakage even under pressure can be obtained. The crystallinity of the polymer can be calculated by measuring the calorific value of the melting by the differential scanning calorimetry (DSC method).

In particular, when the polymer contains polyvinylidene fluoride, the crystallinity of the polymer is preferably 30% or more and 50% or less, and more preferably 35% or more and 45% or less. When the crystallinity is 30% or more, the pressure resistance of the porous layer and the composite semipermeable membrane can be improved. In addition, when the crystallinity is 50% or less, a suitable flexibility to the porous layer can be provided so that a composite semipermeable membrane resistant to breakage, even under pressure, can be obtained.

The average pore diameter on the surface of the porous layer is 5 nm or more and 50 nm or less, and preferably 15 nm or more and 25 nm or less.

The membrane separation layer consists of a crosslinked polyamide. The crosslinked polyamide membrane separation layer is obtained by interfacial polymerization of a multifunctional amine with an acid halide compound.

The polyfunctional amine may be an aromatic polyfunctional amine, an aliphatic polyfunctional amine, or a combination thereof. The aromatic polyfunctional amines may be m-phenylenediamine, p-phenylenediamine, 1,3,5-triaminobenzene, and the like, or N-alkylates thereof, such as N,N-dimethyl m-phenylenediamine, N,N-diethyl m-phenylenediamine, N,N-dimethyl p-phenylenediamine, N,N-diethyl p-phenylenediamine. Alternatively, the aliphatic polyfunctional amine may be piperazine or a derivative thereof.

Examples of the substrate in the composite semipermeable membrane include a fibrous planar structure, specifically, a woven fabric, a knitted fabric, a non-woven fabric, and the like. Among these, a non-woven fabric is preferably used. The non-woven fabric may be made by a spunbond process, a spunlace process, a meltblown process, a carding process, an air-lay process, a wet process, a chemical bond process, a thermal bond process, a needle punch process, a water jet process, a stitch bond process, an electrospinning process, and the like. Also, although the type of fibers constituting the non-woven fabric is not limited, the non-woven fabric is preferably synthetic fibers. Specific examples of fibers may be polyethylene terephthalate (PET), polybutylene terephthalate (PBT), polytrimethylene terephthalate (PTT), polyethylene naphthalate (PEN), polypropylene (PP), polyethylene (PE), polyphenylene sulfide (PPS), polyvinylidene fluoride (PVDF), polyglycolic acid (PGA), polylactic acid (PLA), nylon 6, polycaprolactone (PCL), polyethylene adipate (PEA), polyhydroxyalkanoate (PHA), or copolymers thereof. Among these, a polyester such as polyethylene terephthalate, is preferably used because polyethylene terephthalate is inexpensive, has high dimensional stability, is highly moldable, and has high oil resistance.

The thickness of the composite semipermeable membrane of the present embodiment may be 100 $\mu$m or more and 250 $\mu$m or less. The thickness of the porous layer is 10 $\mu$m or more and 100 $\mu$m or less. The thickness of the membrane separation layer may be 0.01 um or more and 1 $\mu$m or less. The thickness of the substrate may be 50 um or more and 200 um or less.

Examples of the substrate in the composite semipermeable membrane include a fibrous planar structure, specifically, a woven fabric, a knitted fabric, a non-woven fabric, and the like. Among these, a non-woven fabric is preferably used. The non-woven fabric may be made by a spunbond process, a spunlace process, a meltblown process, a carding process, an air-lay process, a wet process, a chemical bond process, a thermal bond process, a needle punch process, a water jet process, a stitch bond process, an electrospinning process, and the like. Also, although the type of fibers constituting the non-woven fabric is not limited, the non-woven fabric is preferably synthetic fibers. Specific examples of fibers may be polyethylene terephthalate (PET), polybutylene terephthalate (PBT), polytrimethylene terephthalate (PTT), polyethylene naphthalate (PEN), polypropylene (PP), polyethylene (PE), polyphenylene sulfide (PPS), polyvinylidene fluoride (PVDF), polyglycolic acid (PGA), polylactic acid (PLA), nylon 6, polycaprolactone (PCL), polyethylene adipate (PEA), polyhydroxyalkanoate (PHA), or copolymers thereof. Among these, a polyester such as polyethylene terephthalate, is preferably used because polyethylene terephthalate is inexpensive, has high dimensional stability, is highly moldable, and has high oil resistance.

The thickness of the composite semipermeable membrane of the present embodiment may be 100 um or more and 250 $\mu$m or less. The thickness of the porous layer may be 10 $\mu$m or more and 100 $\mu$m or less. The thickness of the membrane separation layer may be 0.01 $\mu$m or more and 1 $\mu$m or less. The thickness of the substrate may be 50 $\mu$m or more and 200 $\mu$m or less.

The composite semipermeable membrane of the present embodiment may be a reverse osmosis membrane. Using the composite semipermeable membrane of the present embodiment, for example, NaCl blocking ratio can be 99% or more after desalting a solution of 32,000 mg/L of NaCl solution at a pressure of 5.5 MPa for 2 hours at room temperature (25°C).

The composite semipermeable membrane of the present embodiment is preferably used for desalting an oil-containing liquid as described above. Here, "oil-containing" indicates that oil is dissolved in water or an aqueous solution, or indicates that oil is mixed or emulsified by a surfactant and the like. In addition, the oil may be mineral oil, animal or vegetable oil, high grade fatty acids derived from animal or vegetable oil, and the like. The mineral oil may be, for example, gasoline, fuel oil, and the like, and may include hydrocarbon oils, such as paraffinic, olefinic, or aromatic hydrocarbon oils. In particular, in the present embodiment, desalination of an aromatic hydrocarbon oil-containing liquid, in which examples of oil include benzene, toluene, ethylbenzene, and xylene, can be efficiently performed. Examples of the above-described animal and vegetable oils include fish oil, whale oil, lard, linseed oil, sesame oil, palm oil, and the like.

In addition, water or an aqueous solution containing 0.02 ppm or more of oil can be processed by using the composite semipermeable membrane of the present embodiment. Also, water or an aqueous solution containing 0.1 ppm or more of oil, 1 ppm or more of oil, 10 ppm or more of oil, and 6,000 ppm or less of oil can be continuously processed. When the concentration of oil-containing liquid is greater than 6,000 pmg/L, a contamination speed of the surface of the composite semipermeable membrane becomes faster, which affects the desalination process.

The composite semipermeable membrane of the present embodiment is preferably configured as a flat membrane. In addition, the flat-formed composite semipermeable membrane of the present embodiment can be preferably used in a spiral-shaped membrane module in which the composite semipermeable membrane is wound around the outside of the water collection tube in a spiral-shaped manner.

The composite semipermeable membrane of the present embodiment can be particularly suitably used for desalination of an oil-containing liquid. For example, the composite semipermeable membrane of the present embodiment can be used for effluents generated in petroleum refineries, petrochemical plants, thermal power plants, automotive manufacturing plants, oil manufacturing plants, food manufacturing plants, and the like; household oil-containing waste liquid; oil-containing seawater; or liquid obtained by pretreating aforementioned wastes.

EXAMPLES

Hereinafter, embodiments of the present invention will be described based on examples.

[Evaluation Method]

<Blocking Ratio of Composite Semipermeable Membrane>

To evaluate the salt-blocking ratio of the composite semipermeable membrane, the composite semipermeable membrane was set in a membrane evaluation device (a flow-type flat membrane test cell, manufactured by Nitto Denko Corporation, Membrane Master C70-F), and desalination was conducted by a cross-flow method. An effective penetration area was 32.5 cm$^2$. A supply flow rate was 5 L/min. The evaluation was performed by the following method.

An aqueous NaCl solution of 32,000 mg/L was applied to a composite permeable membrane and desalination was conducted at a pressure of 5.5 MPa for 2 hours. After that, an amount of desalinated water and the amount of NaCl after the desalination were measured. Then, the salt-blocking ratio (%) was calculated based on the NaCl content before and after desalination.

<Compression Ratio of Portion Including Porous Layer and Membrane Separation Layer>

A plurality of samples with a diameter of 75 mm was excised from a composite semipermeable membrane, and the average thickness was determined by measuring the thickness at five points in one sample to obtain an average value (A). In addition, the substrate was peeled off from the composite semipermeable membrane, and the average thickness was determined by measuring the thickness at five points in the peeled substrate to obtain an average value (B). Then, the average value (A) minus the average value (B) was defined as the thickness (C) of the portion including the porous layer and the membrane separation layer before applying a pressure.

Another plurality of samples with a diameter of 75 mm was prepared, and the blocking ratio (%) of the composite semipermeable membrane was calculated under the same condition described above. Then, the average thickness was determined by measuring the thickness at five points of in the sample to obtain an average value (A'). In addition, the substrate was peeled off from the composite semipermeable membrane, and the average thickness was determined by measuring the thickness at five points in the peeled substrate to obtain an average value (B'). Then, the average value (A') minus the average value (B') was defined as the thickness (C') of the portion including the porous layer and the membrane separation layer after applying a pressure. Then, the compression ratio (k) was obtained based on the following equation:

$$\text{Compression ratio (k)\%} = 100 - (C')/(C) \times 100$$

<Porosity of Porous Layer>

When the porous layer was prepared on the substrate, that is, prior to forming the crosslinked polyamide layer (membrane separation layer), samples with a diameter of 75mm were excised from the porous layer sheet having the porous layer on the substrate and dried at 100°C for 1 hour. Thereafter, the thickness (T) and weight (W) of the porous layer sheet were measured.

In addition, the porous layer was peeled off from the porous layer sheet, and the thickness (T1) and weight (W1) of the substrate were measured. The average thickness of the membrane was determined by measuring the thickness at five points of in a sample using the digital indicator "ID-C112X" manufactured by Mitsutoyo Co., Ltd., and an average weight was determined by measuring three times using the balance "AUW220D" manufactured by Shimadzu Co., Ltd.

The porosity ($\varphi$) was calculated based on the following equation.

$$\text{Porosity } \varphi \text{ (\%)} = (1-(W-W1)/(A\times(T-T1)\times\rho))\times100$$

$$A = 3.75\,\text{cm} \times 3.75\,\text{cm} \times 3.14 \text{ (area of 75 mm diameter sample)}$$

$$\rho(\text{PVDF}) = 1.78\ \text{g/cm}^3$$

$$\rho(\text{PEI}) = 1.27\ \text{g/cm}^3$$

$$\rho(\text{PAI}) = 1.42\ \text{g/cm}^3$$

<Crystallinity of Porous Layer >

When the porous layer was prepared on the substrate, that is, prior to forming the crosslinked polyamide layer (membrane separation layer), the substrate was removed from the dried porous layer sheet on the substrate, and approximately 5 mg of the porous layer was sealed to a DSC pan. The crystallinity of the porous layer was measured using a differential scanning calorimeter (DSC-6200) manufactured by Seiko Electronics Co., Ltd. in a temperature range of 50°C to 210°C by increasing the temperature at a rate of 10°C/minute under a nitrogen gas atmosphere to obtain a DSC curve. A baseline of an endothermic value calculation was set from 120°C to the end of melting temperature (about 170°C to 190°C), and the melting calorific value (J/g) was calculated from the area surrounded by the baseline and the endothermic peak. Further, a crystallinity was calculated using the calorific value of a complete crystalline melting of PVDF as 104.7 (J/g).

<Evaluation of Oil Resistance of Composite Semipermeable Membrane>

The oil resistance of the composite semipermeable membrane was evaluated in Examples 2 and 3. The composite semipermeable membrane was immersed in a solution having 85% by weight of xylene and 15% by weight of ethylbenzene as hydrocarbon oil at room temperature for 40 minutes. Thereafter, the blocking ratio in the composite semipermeable membrane was evaluated using the blocking ratio evaluation method described above. Note that, the above-described immersion condition was a simulation of desalination of a liquid having 12.7 ppm of xylene and 2.3 ppm of ethylbenzene over 5 years.

[Example 1]

A homogenous membrane-forming solution was formed by dissolving 19 parts by weight of a polyvinylidene fluoride copolymer (Kynar Flex (Registered trademark) LBG, manufactured by Arkema Corporation) having a weight average molecular weight of 470,000 into 1 part by weight of a polyvinylidene fluoride homopolymer (Kynar (Registered trademark) 761A, manufactured by Arkema Corporation) having a weight average molecular weight of 680,000, 79.48 parts by weight of dimethylacetamide, 0.02 part by weight of polyethylene glycol (polyethylene glycol 35000, manufactured by Merck, Inc.) having a weight average molecular weight of 35,000, and 0.5 part by weight of glycerine at 70°C. The membrane-forming solution was cooled to 40°C and impregnated onto a polyester non-woven fabric with a 0.1 mm thickness, 0.7 g/cm³ using a membrane-forming apparatus equipped with a knife coater. A coater gap of the knife coater was set to 130 um. A microphase separation was generated in a portion where the solution was applied under an atmosphere of 95% relative humidity and a temperature at 30°C, and the resulting layer was allowed to solidify in a solidifying bath at 40°C. Furthermore, the residual solvent was washed off in a washing tank at 70°C to form a porous layer of polyvinylidene fluoride on the non-woven fabric.

Next, the porous layer formed on the non-woven fabric was immersed in a 1.5% by mass of m-phenylenediamine (an aromatic polyfunctional amine compound) aqueous solution for 1 minute so as to be in contact with the porous layer side. The excess m-phenylenediamine aqueous solution was then removed. The porous layer was then immersed for 30 seconds in a naphthene solution containing 0.1% by mass of trimesoyl trichloride (aromatic halide compound) and 0.13% by mass of isophthalic acid dichloride. Thus, a crosslinked polyamide layer (membrane separation layer) was formed on the porous layer, and dried in a dryer at 140°C to obtain a composite semipermeable membrane. The composite semipermeable membrane is configured by arranging the non-woven fabric, the porous layer, and the crosslinked polyamide membrane separation layer in this order. Then, a crystallinity of the porous layer, a porosity before applying a pressure of the porous layer, and a blocking ratio of composite semipermeable membrane, and a compression ratio (k) of a portion including the porous layer and the membrane separation layer were determined by the aforementioned evaluation method. The results are shown in Table 1.

[Example 2]

A polyvinylidene fluoride porous layer was obtained in the same manner as Example 1 except that the membrane-forming solution used included 20 parts by weight of a polyvinylidene fluoride copolymer (Kynar Flex (Registered trademark) LBG, manufactured by Arkema Corporation) having a weight average molecular weight of 470,000, 79.48 parts by weight of dimethylacetamide, 0.02 parts by weight of a polyethylene glycol (polyethylene glycol 20,000, manufactured by Merck, Inc.) having a weight average molecular weight of 20,000, and 0.5 parts by weight of glycerin.

A composite semipermeable membrane was then obtained by forming a crosslinked polyamide layer in the same manner as Example 1. Also, in Example 2, a crystallinity of the porous layer, a porosity before applying a pressure of the porous layer, and a blocking ratio of composite semipermeable membrane, and a compression ratio (k) of a portion including the porous layer and the membrane separation layer were determined by the above-described evaluation method. The results are shown in Table 1. In addition, oil resistance of Example 2 was evaluated. The result is shown in Table 2.

[Example 3]

A polyvinylidene fluoride porous layer was obtained on a non-woven fabric in the same manner as Example 1 except that the membrane-forming solution used included 20 parts by weight of a polyvinylidene fluoride copolymer (Kynar Flex 2850, manufactured by Arkema Corporation) having a weight average molecular weight of 470,000, 79.48 parts by weight of dimethylacetamide, 0.02 parts by weight of polyethylene glycol (polyethylene glycol 20000 (Registered trademark), manufactured by Merck, Inc.) having a weight average molecular weight of 20,000, and 0.5 parts by weight of glycerin.

A composite semipermeable membrane was then obtained by forming a crosslinked polyamide layer in the same manner as Example 1. Also, in Example 3, a crystallinity of the porous layer, a porosity before applying a pressure of the porous layer, and a blocking ratio of composite semipermeable membrane, and a compression ratio (k) of a portion including the porous layer and the membrane separation layer were determined by the above-described evaluation method. The results are shown in Table 1.

[Example 4]

A membrane-forming solution was impregnated onto a polyester non-woven fabric in the same manner as Example 1 except that the membrane-forming solution was formed by mixing 18 parts by weight of polyvinylidene fluoride copolymer (Kynar Flex (Registered trademark) LBG, manufactured by Arkema Corporation) having a weight average molecular weight of 470,000 with 15 parts by weight of polyvinyl pyrrolidone, 66 parts by weight of dimethylacetamide, and 1 part by weight of glycerin. A coater gap of the knife coater was set to 160 $\mu$m. Next, a microphase separation was generated in a portion where the solution was applied under an atmosphere of 90% relative humidity and a temperature at 40°C, and the resulting layer was allowed to solidify in a solidifying bath at 40°C. Furthermore, the residual solvent was washed off in a washing tank at 70°C to form a porous layer of polyvinylidene fluoride on a non-woven fabric.

Then, a crosslinked polyamide layer was formed by the method of forming the membrane separation layer in the same manner as Example 1 described above to obtain a composite semipermeable membrane. Also, in Example 4, a crystallinity the porous layer, a porosity before applying a pressure of the porous layer, and a blocking ratio of composite semipermeable membrane, and a compression ratio (k) of a portion including the porous layer and the membrane separation layer were determined. The results are shown in Table 1.

[Example 5]

A polyvinylidene fluoride porous layer was obtained on a non-woven fabric in the same manner as Example 1 except that a membrane-forming solution was formed by dissolving 22 parts by weight of a polyvinylidene fluoride homopolymer (Kynar (Registered trademark) HSV900, manufactured by Arkema Corporation) having a weight average molecular weight of 1,000,000 into 78 parts by weight of N-methylpyrrolidone at 80°C. Also, Example 5 was performed in the same manner as Example 1 except that a resulting layer was subjected to free running under an atmosphere of 15% relative humidity and a temperature at 40°C, and the resulting layer was allowed to immerse and solidify in a solidifying bath at 25°C.

A composite semipermeable membrane was then obtained by forming a crosslinked polyamide layer in the same manner as Example 1. Also, in Example 5, a crystallinity of the porous layer, a porosity before applying a pressure of the porous layer, a permeation flux and a blocking ratio of composite semipermeable membrane, and a compression ratio (k) of a portion including the porous layer and the membrane separation layer were determined. The results are shown in Table 1.

[Example 6]

A polyvinylidene fluoride porous layer was obtained on a non-woven fabric in the same manner as Example 1 except that a membrane-forming solution was formed by dissolving 24 parts by weight of a polyvinylidene fluoride homopolymer (Kynar (Registered trademark) HSV900, manufactured by Arkema Corporation) having a weight average molecular weight of 1,000,000 into 63 parts by weight of N-methylpyrrolidone and 13 parts by weight of dientylene glycol at 85°C. Also, Example 6 was performed in the same manner as Example 1 except that a resulting layer was subjected to free running under an atmosphere of 15% relative humidity and a temperature at 42°C, and the resulting layer was allowed to immerse and solidify in a solidifying bath at 20°C. A coater gap of the knife coater was set to 120 um.

A composite semipermeable membrane was then obtained by forming a crosslinked polyamide layer as in Example 1. Also, in Example 6, a crystallinity of the porous layer, a porosity before applying a pressure of the porous layer, and a blocking ratio of composite semipermeable membrane, and a compression ratio (k) of a portion including the porous layer and the membrane separation layer were determined. The results are shown in Table 1.

[Example 7]

A homogenous membrane-forming solution was formed by dissolving 18 parts by weight of polyetherimide (SABIC Innovative Plastics, Inc., Ultem1000(Registered trademark)) having a weight average molecular weight of 32,000 into 49.2 parts by weight of N-methylpyrrolidone and 32.8 parts by weight of 1,3-dioxolane at 65°C. A coater gap of the knife coater was set to 120 um. A resulting layer was subjected to free running for a distance of 300 mm, and the resulting layer was allowed to immerse and solidify in a solidifying bath at 40°C. Then, the residual solvent was washed off in a water bath at 45°C to obtain a polytherimide porous layer.

A composite semipermeable membrane was then obtained by forming a crosslinked polyamide layer in the same manner as Example 1. Also, in Example 7, a porosity of the porous layer, a permeation flux and a blocking ratio of composite semipermeable membrane, and a compression ratio (k) of a portion including the porous layer and the membrane separation layer were determined by the above-described evaluation method. The results are shown in Table 1.

[Comparative Example 1]

A membrane with a porous layer of polyvinylidene fluoride used for a spiral type UF membrane element RS50 (manufactured by Nitto Denko Corporation) was prepared. A crosslinked polyamide layer was formed on the membrane in the same manner as Example 1 to form a composite semipermeable membrane. Also, in Comparative Example 1, a crystallinity of the porous layer, a porosity before applying a pressure of the porous layer, a blocking ratio of composite semipermeable membrane, and a compression ratio (k) of a portion including the porous layer and the membrane separation layer were determined. The results are shown in Table 1.

[Comparative Example 2]

A homogenous membrane-forming solution was formed by dissolving 18 parts by weight of polyvinylidene fluoride (Solef (Registered trademark) 6012, manufactured by Solvay, Inc.) having an average molecular weight of 380,000 into 15 parts by weight of polyvinylpyrrolidone, 66.5 parts by weight of dimethylacetamide, and 0.5 parts by weight of glycerin at 70°C. The membrane-forming solution was cooled to 40°C and impregnated onto a polyester non-woven fabric with a 0.1 mm thickness, 0.7 g/cm$^3$ density using a membrane-forming apparatus equipped with a knife coater. A coater gap of the knife coater was set to 180 um. A microphase separation was generated in a portion where the solution was applied under an atmosphere of 95% relative humidity and a temperature at 30°C, and the resulting layer was allowed to solidify in a solidifying bath at 45°C. Furthermore, the residual solvent was washed off in a washing tank at 50°C to form a porous layer of polyvinylidene fluoride on the non-woven fabric.

A crosslinked polyamide layer was then formed in the same manner as Example 1 to obtain a composite semipermeable membrane. Also, in Comparative Example 2, a crystallinity of the porous layer, a porosity before applying a pressure of the porous layer, a blocking ratio of composite semipermeable membrane, and a compression ratio (k) of a portion including the porous layer and the membrane separation layer were determined by the above-described evaluation method. The results are shown in Table 1.

[Comparative Example 3]

A reverse osmosis membrane of a spiral RO membrane element (LG SW 400 R, manufactured by LG chemical) was prepared. The reverse osmosis membrane is a composite semipermeable membrane in which the porous layer is a polysulfone membrane. In Comparative Example 3, oil resistance was evaluated. The results are shown in Table 2.

[Table 1]

| | Example 1 | Example 2 | Example 3 | Example 4 | Example 5 | Example 6 | Example 7 | Comparative Example 1 | Comparative Example 2 |
|---|---|---|---|---|---|---|---|---|---|
| Porous support layer Type of polymer | PVDF | PVDF | PVDF | PVDF | PVDF | PVDF | PEI | PVDF | PVDF |
| Calorific value [J/g] | 39.5 | 35.0 | 40.7 | 44.3 | 33.3 | 35.1 | N/A | 52.8 | 54.5 |
| Crystallinity [%] | 37.7 | 33.4 | 38.9 | 42.3 | 31.8 | 33.5 | N/A | 50.4 | 52.1 |
| Pressure applied [MPa] | 5.5 | 5.5 | 5.5 | 5.5 | 5.5 | 5.5 | 5.5 | 5.5 | 5.5 |
| Blocking ratio [%] | 99.6 | 99.3 | 99.6 | 99.1 | 99.0 | 99.4 | 99.1 | 67.5 | 64.4 |
| Porosity [%] | 47.2 | 43.9 | 49.9 | 64.8 | 69.3 | 35.1 | 49.7 | 86.0 | 84.4 |
| Compression ratio [k] of portion including porous layer and membrane separation | 27.9 | 15.2 | 30.8 | 40.0 | 59.7 | 1.4 | 1.7 | 83.1 | 74.6 |

EP 3 842 127 B1

As shown in Table 1, Examples 1 to 7 in which the compression ratio (k) of the portion including the porous layer and the membrane separation layer in composite semipermeable membrane was 60% or less exhibited a high NaCl blocking ratio of 99% or more. Furthermore, from Table 1, it was found that the NaCl blocking ratio in Comparative Examples 1 and 2 in which the compression ratio (k) of the portion including the porous layer and the membrane separation layer exceeded 60% was inferior to Examples 1 to 7.

[Table 2]

|  | Example 2 | Comparative Example 3 |
| --- | --- | --- |
| Blocking ratio [%] before immersing in xylene-containing liquid | 99.30 | 99.4 |
| Blocking ratio [%] after immersing in xylene-containing liquid | 97.65 | could not be assessed |

From Table 2, it was found that the NaCl blocking ratio of Example 2 was high even after immersion in the xylene-containing liquid. In contrast, in Comparative Example 3, the blocking ratio could not be assessed because the porous layer was dissolved and delamination between the porous layer and the membrane separation layer was generated after immersion in the xylene-containing liquid for 40 minutes at room temperature.

DESCRIPTION OF THE REFERENCE NUMERALS

1   Membrane separation layer
2   Porous layer
3   Substrate
10   Composite semipermeable membrane

## Claims

1.  A composite semipermeable membrane (10) which is a reverse osmosis membrane and comprises:

    a porous layer (2) being a homogeneous layer as a whole and consisting of a polymer; and
    a membrane separation layer (1) consisting of a crosslinked polyamide and provided on the porous layer (2);
    wherein the polymer is a fluoropolymer or is selected from polyetherimide and polyamideimide,
    wherein a compression ratio of a portion including the porous layer (2) and the membrane separation layer (1) when subjected to a pressure of 5.5 MPa and measured according to the description is 60% or less,
    wherein the porous layer (2) has an average pore diameter from 5 nm to 50 nm on the surface and extends from said surface with a thickness of 10 $\mu$m to 100 $\mu$m and is a layer formed by a non-solvent-induced phase separation method or a thermally-induced phase separation method with forming the porous layer (2) on a substrate (3), and the membrane separation layer (1) is a layer formed by immersion of a polyfunctional amine compound and thereafter contacting the porous layer (2) with a solution of an acid halide compound to perform interfacial polymerization.

2.  The composite semipermeable membrane (10) according to claim 1, wherein the polymer is soluble in a water-soluble solvent having a boiling point of 130°C or higher and 250°C or lower.

3.  The composite semipermeable membrane (10) according to claim 2, wherein the water-soluble solvent contains one or more compounds selected from among dimethylformamide (DMF), dimethyl sulfoxide (DMSO), dimethyl acetamide (DMAC), 1,3-dimethyl-2-imidazolidinone (DMI), N-methylpyrrolidone (NMP), and $\gamma$-butyrolactone (GBL).

4.  The composite semipermeable membrane according to any one of claims 1 to 3, wherein the fluoropolymer is polyvinylidene fluoride (PVDF).

5.  The composite semipermeable membrane (10) according to any one of claims 1 to 4, wherein a porosity of the porous layer (2) before applying a pressure is 35% or more and 70% or less.

6.  The composite semipermeable membrane (10) according to any one of claims 1 to 5, wherein a porosity of the porous layer (2) after applying a pressure is 30% or more and 60% or less.

7. The composite semipermeable membrane (10) according to any one of claims 1 to 6, wherein a crystallinity of the polymer as measured according to the description is 10% or more and 80% or less.

8. The composite semipermeable membrane (10) according to any one of claims 1 to 7, wherein the polymer has a weight average molecular weight of 100,000 or more and 1,000,000 or less.

9. The composite semipermeable membrane (10) according to any one of claims 1 to 8, wherein the fluoropolymer contains vinylidene fluoride, a weight average molecular weight of the polymer is 100,000 or more and 1,000,000 or less, and a crystallinity of the polymer as measured according to the description is 30% or more and 50% or less.

10. The composite semipermeable membrane (10) according to any one of claims 1 to 9, wherein the composite semipermeable membrane (10) is a flat membrane.

**Patentansprüche**

1. Halbdurchlässige Verbundmembran (10), die eine Umkehrosmosemembran ist und umfasst:

   eine poröse Schicht (2), die in ihrer Gesamtheit eine homogene Schicht ist und aus einem Polymer besteht; und eine Membrantrennschicht (1), die aus einem vernetzten Polyamid besteht und auf der porösen Schicht (2) vorgesehen ist;
   wobei das Polymer ein Fluorpolymer ist oder aus Polyetherimid und Polyamidimid ausgewählt ist,
   wobei ein Verdichtungsverhältnis eines Abschnitts, der die poröse Schicht (2) und die Membrantrennschicht (1) beinhaltet, wenn er einem Druck von 5,5 MPa unterzogen wird und gemäß der Beschreibung gemessen wird, 60% oder weniger beträgt,
   wobei die poröse Schicht (2) einen durchschnittlichen Porendurchmesser von 5 nm bis 50 nm auf der Oberfläche aufweist und sich von der Oberfläche mit einer Dicke von 10 $\mu$m bis 100 $\mu$m erstreckt und eine Schicht ist, die durch ein Verfahren einer durch ein NichtLösungsmittel induzierten Phasentrennung oder ein Verfahren einer thermisch induzierten Phasentrennung unter Bilden der porösen Schicht (2) auf einem Substrat (3) gebildet wird, und die Membrantrennschicht (1) eine Schicht ist, die durch Eintauchen einer polyfunktionellen Aminverbindung und danach Inkontaktbringen der porösen Schicht (2) mit einer Lösung einer Säurehalogenidverbindung, um eine Grenzflächenpolymerisation durchzuführen, gebildet wird.

2. Halbdurchlässige Verbundmembran (10) nach Anspruch 1, wobei das Polymer in einem wasserlöslichen Lösungsmittel mit einem Siedepunkt von 130°C oder höher und 250°C oder niedriger löslich ist.

3. Halbdurchlässige Verbundmembran (10) nach Anspruch 2, wobei das wasserlösliche Lösungsmittel eine oder mehrere Verbindungen enthält, die aus Dimethylformamid (DMF), Dimethylsulfoxid (DMSO), Dimethylacetamid (DMAC), 1,3-Dimethyl-2-imidazolidinon (DMI), N-Methylpyrrolidon (NMP) und $\gamma$-Butyrolacton (GBL) ausgewählt sind.

4. Halbdurchlässige Verbundmembran nach einem der Ansprüche 1 bis 3, wobei das Fluorpolymer Polyvinylidenfluorid (PVDF) ist.

5. Halbdurchlässige Verbundmembran (10) nach einem der Ansprüche 1 bis 4, wobei eine Porosität der porösen Schicht (2) vor Anwenden eines Drucks 35% oder mehr und 70% oder weniger beträgt.

6. Halbdurchlässige Verbundmembran (10) nach einem der Ansprüche 1 bis 5, wobei eine Porosität der porösen Schicht (2) vor Anwenden eines Drucks 30% oder mehr und 60% oder weniger beträgt.

7. Halbdurchlässige Verbundmembran (10) nach einem der Ansprüche 1 bis 6, wobei eine Kristallinität des Polymers, wie gemäß der Beschreibung gemessen, 10% oder mehr und 80% oder weniger beträgt.

8. Halbdurchlässige Verbundmembran (10) nach einem der Ansprüche 1 bis 7, wobei das Polymer eine gewichtsmittlere Molmasse von 100.000 oder mehr und 1.000.000 oder weniger aufweist.

9. Halbdurchlässige Verbundmembran (10) nach einem der Ansprüche 1 bis 8, wobei das Fluorpolymer Vinylidenfluorid enthält, eine gewichtsmittlere Molmasse des Polymers 100.000 oder mehr und 1.000.000 oder weniger beträgt und eine Kristallinität des Polymers, wie gemäß der Beschreibung gemessen, 30% oder mehr und 50% oder weniger beträgt.

**10.** Halbdurchlässige Verbundmembran (10) nach einem der Ansprüche 1 bis 9, wobei die halbdurchlässige Verbundmembran (10) eine flache Membran ist.

**Revendications**

**1.** Membrane semiperméable composite (10) qui est une membrane d'osmose inverse et comprend :

une couche poreuse (2) étant une couche homogène dans une totalité et consistant en un polymère ; et une couche de séparation de membrane (1) consistant en un polyamide réticulé et fournie sur la couche poreuse (2) ;
dans laquelle le polymère est un fluoropolymère ou est choisi parmi du polyétherimide et polyamideimide,
dans laquelle un taux de compression d'une portion incluant la couche poreuse (2) et la couche de séparation de membrane (1) lorsque soumise à une pression de 5,5 MPa et mesuré selon la description est de 60 % ou inférieur,
dans laquelle la couche poreuse (2) présente un diamètre moyen de pore de 5 nm à 50 nm sur la surface et s'étend à partir de ladite surface avec une épaisseur de 10 $\mu$m à 100 $\mu$m et est une couche formée par un procédé de séparation de phase non induite par solvant ou un procédé de séparation de phase thermiquement induite avec formation de la couche poreuse (2) sur un substrat (3), et la couche de séparation de membrane (1) est une couche formée par immersion d'un composé d'amine polyfonctionnelle et mise en contact subséquente de la couche poreuse (2) avec une solution d'un composé d'halogénure d'acide pour réaliser une polymérisation interfaciale.

**2.** Membrane semiperméable composite (10) selon la revendication 1, dans laquelle le polymère est soluble dans un solvant soluble dans l'eau ayant un point d'ébullition de 130°C ou supérieur et 250°C ou inférieur.

**3.** Membrane semiperméable composite (10) selon la revendication 2, dans laquelle le solvant soluble dans l'eau contient un ou plusieurs composés choisis parmi le diméthylformamide (DMF), diméthylsulfoxyde (DMSO), diméthylacétamide (DMAC), 1,3-diméthyl-2-imidazolidinone (DMI), N-méthylpyrrolidone (NMP), et $\gamma$-butyrolactone (GBL).

**4.** Membrane semiperméable composite selon l'une quelconque des revendications 1 à 3, dans laquelle le fluoropolymère est du poly(fluorure de vinylidène) (PVDF).

**5.** Membrane semiperméable composite (10) selon l'une quelconque des revendications 1 à 4, dans laquelle une porosité de la couche poreuse (2) avant application d'une pression est de 35 % ou plus et 70 % ou moins.

**6.** Membrane semiperméable composite (10) selon l'une quelconque des revendications 1 à 5, dans laquelle une porosité de la couche poreuse (2) après application d'une pression est de 30 % ou plus et 60 % ou moins.

**7.** Membrane semiperméable composite (10) selon l'une quelconque des revendications 1 à 6, dans laquelle une cristallinité du polymère comme mesurée selon la description est de 10 % ou plus et 80 % ou moins.

**8.** Membrane semiperméable composite (10) selon l'une quelconque des revendications 1 à 7, dans laquelle le polymère présente une masse moléculaire moyenne en masse de 100 000 ou plus et 1 000 000 ou moins.

**9.** Membrane semiperméable composite (10) selon l'une quelconque des revendications 1 à 8, dans laquelle le fluoropolymère contient du fluorure de vinylidène, une masse moléculaire moyenne en masse du polymère est de 100 000 ou plus et 1 000 000 ou moins, et une cristallinité du polymère comme mesurée selon la description est de 30 % ou plus et 50 % ou moins.

**10.** Membrane semiperméable composite (10) selon l'une quelconque des revendications 1 à 9, dans laquelle la membrane semiperméable composite (10) est une membrane plate.

FIG.1

10

1

2

3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014523340 W
- JP 58093734 A
- US 5702503 A
- WO 2019131304 A1
- CN 108079806 A

### Non-patent literature cited in the description

- **LIU FENG et al.** A review: the effect of the microporous support during interfacial polymerization on the morphology and performances of a thin film composite membrane for liquid purification. *RSC Advances,* 01 November 2019, vol. 9 (61), 35417-35428
- Preparation of PMDA/ODA polyimide membrane for use as substrate in a thermally stable composite reverse osmosis membrane. **C. BA et al.** Journal of Membrane Science. ELSEVIER BV, 01 November 2010, vol. 363, 140-148